# EUROPEAN PATENT APPLICATION

(11) **EP 3 045 304 A1**
(43) Date of publication of application: **20.07.2016**
(21) Application number: 16151250.4
(22) Date of filing: 14.01.2016
(51) Int. Cl.: B31D 1/02, B23K 26/60

(54) **METHOD FOR MANUFACTURING PRINTED MATERIAL, PRINTED MATERIAL, AND MANUFACTURING DEVICE**

(30) Priority: 16.01.2015 JP 2015006509
(71) Applicant: Seiko Epson Corporation, Tokyo 163 (JP)
(72) Inventor: Yamazaki, Yutaka, Nagano, 392-8502 (JP)
(74) Representative: Hoffmann Eitle

(57) **Abstract**

A method for manufacturing a printed material includes: irradiating, with an electron beam, a resin sheet of a label sheet in which the resin sheet, an adhesive arranged on one side of the resin sheet, and a release paper for protecting the adhesive are stacked on each other; printing an image on the other side of the resin sheet that is opposite to the one side; and irradiating the other side of the resin sheet with a laser and thus splitting the resin sheet into a desired shape.

## Description

### BACKGROUND

### 1. Technical Field

The present invention relates to a method for manufacturing a printed material, a printed material, and a manufacturing device.

### 2. Related Art

Recently, as labels attached to products and the like, printed labels printed by label printers are getting widely used instead of handwritten labels. Moreover, label printers are facing increasing demands for an ability to produce multiple types of labels in small quantities and in multiple colors, and the like.

To cope with these demands, JP-A-2003-226313 discloses a label printer device. The printer device disclosed in JP-A-2003-226313 has a thermal-head print device and a laser cutting mechanism which die-cuts a printed label without backing paper into the shape of a frame, in a process of carrying a continuous label without backing paper. Individual label pieces die-cut by the laser cutting mechanism are discharged from the label printer device. In this label printer device, print information, information of frames to be die-cut and the like are linked together, thus enabling production of multiple types of labels.

However, while JP-A-2003-226313 does not mention any material of the label without backing paper, if a resin label material is used, as is often used recently, the label material is melted along and covers the outer edges of the individual label pieces by the heat of the laser applied to the frame-shaped area to be die-cut, and consequently clouds the outer edge parts of the individual label pieces. For color-printed labels, this clouding of the outer edge parts is one of the causes of the spoiled appearance of printed labels.

### SUMMARY

An advantage of some aspects of the invention is that the occurrence of clouded parts due to the laser on the outer edges of labels in forming individual label pieces is restrained.

The invention can be realized in the following configurations or application examples.

### Application Example 1

A method for manufacturing a printed material according to this application includes: irradiating a resin sheet with an electron beam; printing an image on at least one side of the resin sheet; and irradiating the resin sheet with a laser and thus splitting the resin sheet into a desired shape.

Due to the heat of the laser applied in the splitting of the resin sheet, the resin melts and becomes fluid, and then solidifies and accumulates in the way of covering the resin sheet. The outer edge part that is the split part of the printed material to be split has a different appearance from the resin, for example, an appearance having a clouded frame.

Thus, in the method for manufacturing a printed material according to this application example, since an electron beam is applied to the resin sheet, radicals are formed in the resin material of the resin sheet and the cross-linking reaction thereof provides a meshed structure in the resin material. This increases the viscosity of the resin material. Thus, the melting and spreading of the resin material on the surface of the resin sheet can be restrained and the appearance quality can be improved.

### Application Example 2

A method for manufacturing a printed material according to this application includes: irradiating, with an electron beam, a resin sheet of a label sheet in which the resin sheet, an adhesive arranged on one side of the resin sheet, and a release paper for protecting the adhesive are stacked on each other; printing an image on the other side of the resin sheet that is opposite to the one side; and irradiating the other side of the resin sheet with a laser and thus splitting the resin sheet into a desired shape.

According to the method for manufacturing a printed material according to this application example, even though the laser is applied from the print surface side, the irradiation of the resin sheet with the electron beam causes radicals to be formed in the resin material of the resin sheet and the cross-linking reaction thereof provides a meshed structure in the resin material. This increases the viscosity of the resin material. Thus, the melting and spreading of the resin material on the print surface of the resin sheet can be restrained and the appearance quality can be improved.

### Application Example 3

In the application example, the printing may be carried out by an ink jet method.

According to this application example, print contents such as print color and print image can be switched easily. Therefore, it is possible to manufacture multiple types of printed materials in small quantities.

### Application Example 4

A printed material according to this application example has an image printed on at least one side of a resin sheet irradiated with an electron beam. The resin sheet has a split part for splitting the resin sheet into a desired shape. The split part is formed by a laser.

Due to the heat of the laser, the resin of the split part of the resin sheet melts and becomes fluid, and then solidifies and accumulates in the way of covering the resin sheet. The outer edge part that is the split part of the printed material to be split has a different appearance from the resin, for example, an appearance having a clouded frame.

The printed material according to this application example uses a resin sheet in which radicals are formed in the resin material of the resin sheet by the irradiation with the electron beam and in which the cross-linking reaction thereof provides a meshed structure in the resin material. This increases the viscosity of the resin material. Thus, the melting and spreading of the resin material on the surface of the resin sheet can be restrained and the appearance quality can be improved.

### Application Example 5

A printed material according to this application example includes a label sheet in which a resin sheet, an adhesive arranged on one side of the resin sheet, and a release paper for protecting the adhesive are stacked on each other, with the resin sheet irradiated with an electron beam. An image is printed on the other side of the resin sheet that is opposite to the one side. The other side of the resin sheet is irradiated with a laser, and a split part for splitting the resin sheet into a desired shape is thus formed.

The printed material according to this application example uses a resin sheet in which radicals are formed in the resin material of the resin sheet by the irradiation with the electron beam and in which the cross-linking reaction thereof provides a meshed structure in the resin material, even though the laser is applied from the print surface side, forming the split part. This increases the viscosity of the resin material. Thus, the melting and spreading of the resin material on the printed surface of the resin sheet can be restrained and the appearance quality can be improved.

### Application Example 6

In the application example, the printing of the image may be carried out by an ink jet method.

According to this application example, print contents such as print color and print image can be switched easily. Therefore, printed materials can be provided in multiple types and in small quantities.

### BRIEF DESCRIPTION OF THE DRAWINGS

The invention will be described with reference to the accompanying drawings, wherein like numbers reference like elements.
FIG. 1 is a flowchart showing a method for manufacturing a printed material according to a first embodiment.
FIGS. 2A and 2B show a manufacturing device for manufacturing a printed material by the method for manufacturing a printed material according to the first embodiment. FIG. 2A shows a schematic configuration. FIG. 2B is a partly enlarged cross-sectional view of a part A shown in FIG. 2A.
FIGS. 3A to 3C show a printing process and a splitting-cutting process in the method for manufacturing a printed material according to the first embodiment. FIG. 3A is a plan view of the appearance. FIG. 3B is a cross-sectional view taken along B-B' shown in FIG. 3A. FIG. 3C is a cross-sectional view taken along C-C' shown in FIG. 3A.
FIGS. 4A to 4C are cross-sectional views showing the splitting-cutting process in the method for manufacturing a printed material according to the first embodiment.
FIG. 5 is an enlarged cross-sectional view of a split part in the splitting-cutting process in the method for manufacturing a printed material according to the first embodiment.
FIGS. 6A to 6E show a manufacturing device for manufacturing a printed material by another example of the method for manufacturing a printed material according to the first embodiment. FIG. 6A shows a schematic partial configuration. FIG. 6B is an outer perspective view, as viewed in the direction of V2 shown in FIG. 6A. FIG. 6C is a cross-sectional view taken along D-D' shown in FIG. 6B. FIG. 6D is an outer perspective view, as viewed in the direction of V1 shown in FIG. 6A. FIG. 6E is a cross-sectional view taken along E-E' shown in FIG. 6D.
FIGS. 7A and 7B show a printed material according to a second embodiment. FIG. 7A is an outer perspective view.
FIG. 7B is a cross-sectional view taken along F-F' shown in FIG. 7A.

### DESCRIPTION OF EXEMPLARY EMBODIMENTS

Hereinafter, embodiments of the invention will be described with reference to the drawings.

### First Embodiment

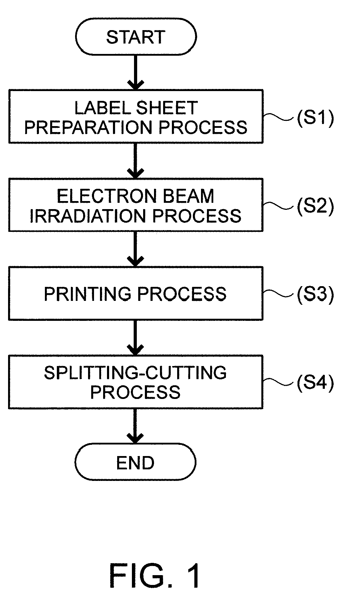

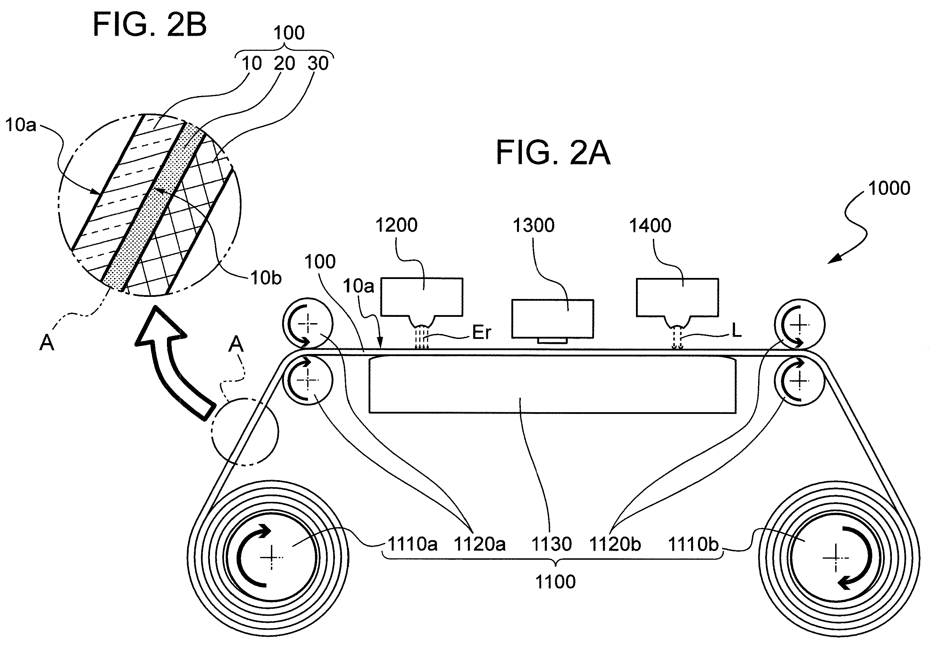

FIG. 1 is a flowchart showing a method for manufacturing a printed material according to a first embodiment. FIGS. 2A and 2B show a schematic configuration of a device for manufacturing a printed material according to the flowchart shown in FIG. 1.

### Label Sheet Preparation Process

The manufacturing starts with a label sheet preparation process (S1) in which a material to be printed and processed by a label manufacturing device 1000 shown in FIG. 2A (hereinafter referred to as a manufacturing device 1000) is prepared. In the label sheet preparation process (S1), a label sheet 100 formed as a continuum in which a resin sheet 10, an adhesive 20 and a release sheet 30 are stacked on each other is prepared, as shown in FIG. 2B, which is an enlarged cross-sectional view of a part A shown in FIG. 2A. The label sheet 100 is installed in a rolled form on a material let-off unit 1110a of a conveyor unit 1100 provided in the manufacturing device 1000 shown in FIG. 2A.

The resin sheet 10 can be provided by shaping a polypropylene resin, polyethylene terephthalate resin or the like. However, this is not limiting. Any resin material on which printing and splitting-cutting can be performed as described later may be used. In this embodiment, polypropylene is used as an example.

The adhesive 20 is not particularly limited and is suitably set according to the qualities required such as adhesiveness to the resin sheet 10 and adhesiveness to a label attachment target. The release sheet 30 is also suitably set according to the qualities required such as adhesive to the adhesive 20. However, a multilayer sheet made up of a release layer, a filler layer and a base is generally used. The release layer is a layer that the adhesive 20 contacts. A silicone resin is suitably used for the release layer. The filler layer prevents chemicals of the release layer from permeating the base. A clay coating or PVA (polyvinyl alcohol) is used for the filler layer. For the base, fine-quality paper, glassine paper or the like is used.

### Electron Beam Irradiation Process

The resin sheet 10 installed on the material let-off unit 1110a in the label sheet preparation process (S1) is carried onto a table 1130 by a first conveyor roller 1120a provided in the conveyor unit 1100. Then, an electron beam irradiation device 1200 provided in the manufacturing device 1000 shown in FIG. 2A executes an electron beam irradiation process (S2) in which the label sheet 100 is irradiated with an electron beam Er. In the electron beam irradiation process (S2), the label sheet 100 is irradiated with a predetermined dose of the electron beam Er from the electron beam irradiation device 1200 while the label sheet 100 is carried on the table 1130. As a condition of the electron beam, for example, the electron beam Er with a surface absorbed dose of approximately 30 kGy is applied from the side of a surface 10a opposite to a coated surface 10b with the adhesive 20, of the resin sheet 10.

Since the resin sheet 10 in this embodiment is made of a polypropylene resin as described above, radicals are generated by the irradiation with the electron beam Er. As the cross-linking reaction of the radicals proceeds, the resin sheet becomes a high-molecular material with a meshed structure. Thus, molten marks formed by a laser used as a cutting unit in a splitting-cutting process described later can be reduced.

### Printing Process

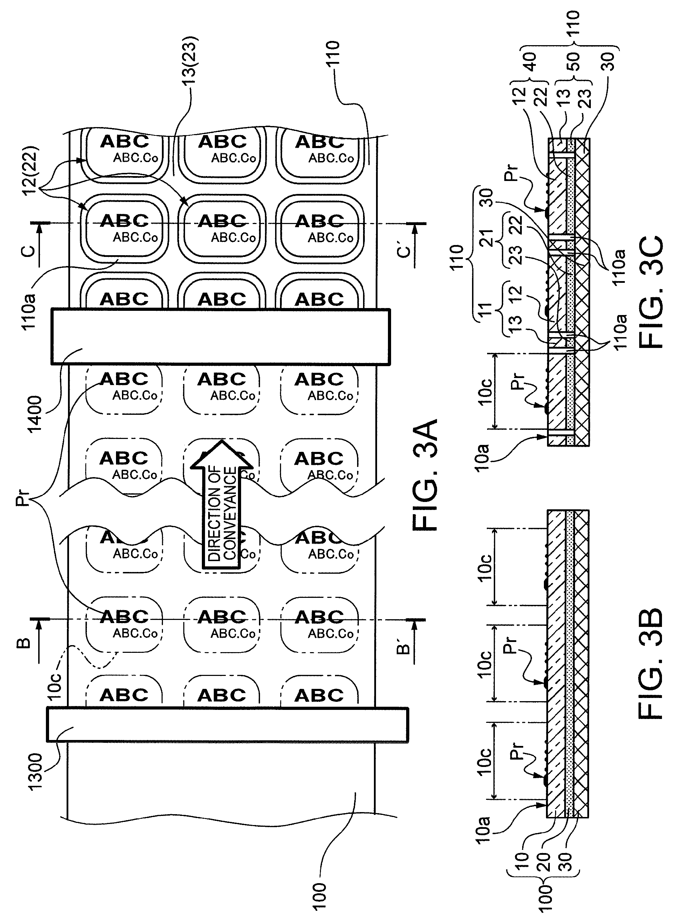

Having gone through the electron beam irradiation process (S2), the label sheet 100 then shifts to a printing process (S3). In the printing process (S3), in the manufacturing device 1000 according to this embodiment, an image Pr is printed within a label shape area 10c on the opposite surfaced 10a (hereinafter referred to as a print surface 10a) on the basis of image data by an ink jet printing device 1300 (hereafter referred to as a printing device 1300), as shown in FIG. 3A.

In the printing process (S3), since the manufacturing device 1000 according to this embodiment has the printing device 1300 with an ink jet method, printing can be carried out without stopping the conveyance of the label sheet 100, and the switching and execution of print data can be easily carried out. However, the printing method is not limited to the ink jet printing and may also be offset printing, screen printing and the like, for example.

### Splitting-Cutting Process

The label sheet 100 with the image Pr printed thereon by the printing process (S3) then shifts to a splitting-cutting process (S4). The splitting-cutting process (S4) is the process in which a split part 110a is formed in the resin sheet 10 and the adhesive 20 for cutting out the label shape area 10c, thus forming an individual label piece 40, as shown in FIGS. 3A and 3C. The split part 110a is formed by a laser L applied by a laser irradiation device 1400 shown in FIG. 2A. As the laser L, a carbon dioxide laser with an output of approximately 177 W is suitably used.

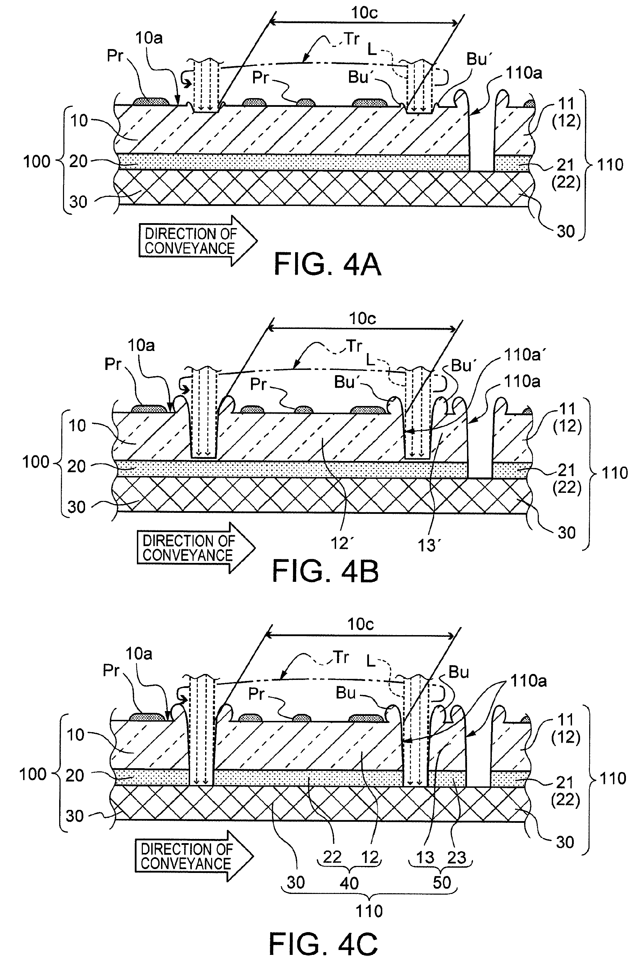

The laser L is oscillated from a laser oscillation unit, not shown, provided in the laser irradiation device 1400. A galvano mirror which reflects the oscillated laser L and thus applies the laser L at a predetermined position is driven to scan the label sheet with the laser L at a scanning speed of about 3000 mm/second. The laser L is applied at a predetermined irradiation position based on the profile data of the split part 110a. The laser L, thus applied, causes the resin sheet 10 and the adhesive 20 to melt and causes a part of the resin sheet 10 and the adhesive 20 to evaporate, thus forming the split part 110a. FIGS. 4A to 4C are conceptual views for explaining the state where the split part 110a is formed by the laser L from the laser irradiation device 1400.

First, as shown in FIG. 4A, the laser L is applied toward the print surface 10a of the resin sheet 10 of the label sheet 100. The surface of the print surface 10a gradually starts melting due to the energy of the laser L. A molten part 110a' in the shaping process of the split part 110a is formed. At this point, as the resin material of the resin sheet 10 is melted, the viscosity of the resin material falls and becomes fluid. Then, an initial bump part Bu' begins to be formed on the print surface 10a at the outer edge of the laser L.

Since the laser L is applied along a moving trajectory Tr relative to the label sheet 100, following the shape of the split part 110a for cutting out the label shape area 10c, the initial bump part Bu' is formed along the outer edge of the label shape area 10c and the outer peripheral edge part on the print surface 10a of the molten part 110a'.

Then, as shown in FIG. 4B, as the molten part 110a' is formed more deeply, the molten resin material flows toward the print surface 10a and the initial bump part Bu' gradually becomes larger and bulges further. Then, as shown in FIG. 4C, the adhesive 20 is split by the laser L and the split part 110a is formed. The splitting-cutting process (S4) thus ends.

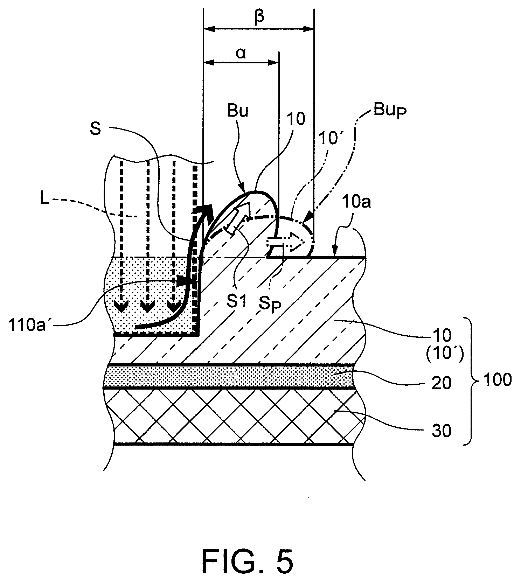

FIG. 5 is an enlarged cross-sectional view for schematically explaining the state where a bump part Bu is formed. As shown in FIG. 5, as the laser L is applied, the resin present in the area of the molten part 110a' of the resin sheet 10 melts and becomes fluid. Then, the resin flows out along the sidewall of the molten part 110a' toward the print surface 10a via a flow path S indicated by an arrow in the illustration. The resin is then cooled by the ambient air, loses its fluidity and becomes a solid resin. This is repeated as the irradiation with the laser L proceeds. The bump part Bu is thus formed.

According to this embodiment, the electron beam irradiation process (S2) is provided before the splitting-cutting process (S4) and the label sheet 100 is irradiated with a predetermined dose of the electron beam Er. In the electron beam irradiation process (S2), radicals are generated in the resin sheet 10 made of a polypropylene resin and the resin changes to a meshed structure due to the cross-linking reaction. That is, by changing to the meshed structure, the resin melted by the laser L is changed to a material having a higher viscous fluidity than in the case where the resin is not irradiated with the electron beam Er.

The difference in the state in the splitting-cutting process (S4) between the case with the irradiation with the electron beam Er and the case without the irradiation emerges as the difference between the bump part Bu and a bump part BuP shown in FIG. 5. Here, the bump part BuP represents a bump part formed on a resin sheet 10' that is not irradiated with the electron beam Er, that is, formed by a process without having the electron beam irradiation process (S2).

As shown in FIG. 5, in the resin sheet 10 irradiated with the electron beam Er described in this embodiment, while the resin is melted by the laser L and becomes fluid, the resin flows to raise the bump part Bu in the direction of an arrow S1, which is upward in the illustration, because of the high viscous fluidity. Meanwhile, in the resin sheet 10' not irradiated with the electron beam Er, the resin has a lower viscous fluidity than in the resin sheet 10 irradiated with the electron beam Er and therefore flows in the direction of an arrow SP along the surface of the print surface 10a, that is, to expand as viewed in a plan view of the print surface 10a. Therefore, if the expansion of the bump part Bu as viewed in a plan view from the molten part 110a' or the split part 110a is α and the expansion of the bump part BuP as in a plan view is β, β>a holds.

For example, if the resin sheets 10, 10' are transparent sheets, the bump parts Bu, BuP are parts that are melted and then solidified and therefore clouded and significantly less transparent. That is, a strip-like clouded part is formed on the outer edge part of the individual label piece 40 shown in FIG. 3C or FIG. 4C and this spoils the appearance of the individual label piece 40. However, in the label sheet 100 according to the embodiment, since the resin sheet 10 is provided with a meshed structure by the irradiation with the electron beam Er, the expansion α of the bump part Bu that becomes clouded, that is, the expansion of the bump of the molten resin by the laser L, can be restrained and the appearance of the label can be prevented from being spoilt.

Also, if a print Pr is made on the print surface 10a up to the outer peripheral edge of the individual label piece 40, the bump part Bu and the initial bump part Bu' are formed to cover the print Pr and consequently impair the legibility of the print Pr at the outer peripheral edge. However, even in this case, in the label sheet 100 according to the embodiment, since the resin sheet 10 is provided with a meshed structure by the irradiation with the electron beam Er, the expansion α of the bump part Bu hampering the legibility of the print Pr, that is, the expansion of the bump of the molten resin by the laser L, can be restrained and the appearance of the label can be prevented from being spoilt.

As shown in FIG. 4C, by going through the splitting-cutting process (S4), the individual label piece 40 having an adhesive part 22 and a print sheet 12 that are split by the split part 110a on the release sheet 30 is formed. Also, in a label sheet 110 having a resin sheet 11 and an adhesive 21 that have the split part 110a, a separate sheet 50 having a separate adhesive part 23 and a separate resin sheet part 13 that are formed to be separable from the individual label piece 40 at the split part 110a is formed as well.

In this way, when the splitting-cutting process (S4) is finished, the label sheet 110 in which the individual label piece 40 as a finished product is formed on the release sheet 30 can be obtained and taken out on a label sheet take-up unit 1110b shown in FIG. 2A. While the method for manufacturing the label sheet 110 according to the embodiment is described in terms of a configuration in which the individual label piece 40 and the separate sheet 50 are provided on the release sheet 30, a separate sheet stripping process may be provided after the splitting-cutting process (S4).

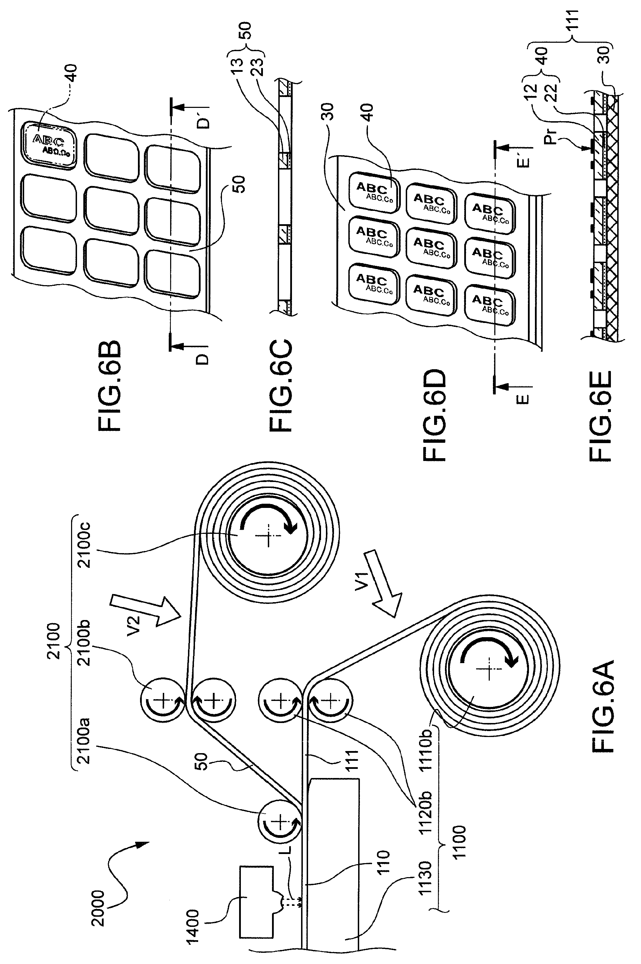

FIG. 6A shows a schematic configuration of a label manufacturing device including a separate sheet stripping process. FIG. 6B is an outer perspective view, as viewed in the direction of an arrow V2 shown in FIG. 6A. FIG. 6C is a schematic cross-sectional view taken along D-D' shown in FIG. 6B. FIG. 6D is an outer perspective view, as viewed in the direction of an arrow V1 shown in FIG. 6A. FIG. 6E is a schematic cross-sectional view taken along E-E' shown in FIG. 6D.

As shown in FIG. 6A, the separate sheet stripping process is executed by a label manufacturing device 2000 (hereinafter referred to as a manufacturing device 2000) having a separate sheet stripping unit 2100. The manufacturing device 2000 has the configuration of the manufacturing device 1000 shown in FIG. 2A, with the separate sheet stripping unit 2100 added thereto. Therefore, the same components as those of the manufacturing device 1000 are denoted by the same reference numbers and will not be described further.

As shown in FIG. 6A, a label sheet 110 in which a split part 110a is formed by a laser L applied from a laser irradiation device 1400 in the splitting-cutting process (S4) is separated into a separate sheet 50 and an individual piece sheet 111 where an individual label piece 40 is left on a release sheet 30 shown in FIG. 6E, at a separation roller 2100a provided in the separate sheet stripping unit 2100.

The individual piece sheet 111 is taken up in a rolled shape by a label sheet take-up unit 1110b as a label sheet finished product. Meanwhile, the separate sheet 50 separated at the separation roller 2100a is taken up by a separate sheet take-up unit 2100c via a conveyor roller 2100b.

As shown in FIGS. 6B and 6C, the separate sheet 50 is separated from the release sheet 30 of the label sheet 110, leaving the individual label piece 40 on the release sheet 30. The separate sheet 50 has a separate adhesive part 23 and is separated and carried. Therefore, in order for the manufacturing device 2000 to execute the separate sheet stripping process, the separate sheet 50 is formed as a continuum at least in the direction of conveyance.

The individual piece sheet 111 where the individual label piece 40 left on the release sheet 30 shown in FIGS. 6D and 6E can be sent to a process in which the individual piece sheet 111 is cut in a desired size from the rolled shape on the label sheet take-up unit 1110b in this example and then formed into a sheet so that the individual label piece 40 is attached to an object, though not illustrated.

### Second Embodiment

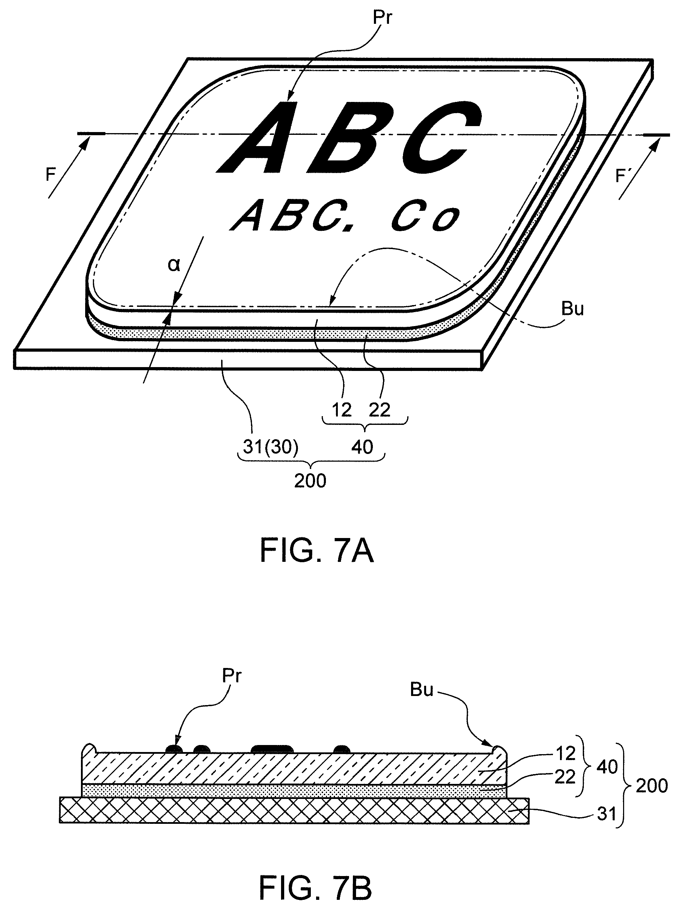

As a second embodiment, a label 200 as a printed material obtained from the label sheet 110 manufactured by the manufacturing method according to the first embodiment by the manufacturing device 1000 will be described. FIGS. 7A and 7B show the label 200 according to the second embodiment. FIG. 7A is an outer perspective view. FIG. 7B is a cross-sectional view taken along F-F' shown in FIG. 7A.

As shown in FIG. 7A, the label 200 is obtained by cutting the release sheet 30 to include the individual label piece 40, of the label sheet 110 shown in FIGS. 3A to 3C or the individual piece sheet 111 shown in FIGS. 6A to 6E, and then stripping and removing the separate sheet 50. In the label 200, it is preferable that a release paper 31 formed as an individual piece by cutting the release sheet 30 is cut to be larger than the individual label piece 40, as illustrated. That is, when stripping the individual label piece 40 from the release paper 31, the releasability of the individual label piece 40 can be increased.

Since the individual label piece 40 of the label 200 is provided by the manufacturing method according to the first embodiment, the bump part Bu formed in the splitting-cutting process (S4) shown in FIG. 4C is formed along the outer peripheral edge of the individual label piece 40 as shown in FIGS. 7A and 7B, which is described above with reference to FIG. 5. However, since this is the individual label piece 40 formed out of the resin sheet 10 irradiated with the electron beam Er, the remaining width of the bump part Bu, that is, the expansion α from the print surface 10a as viewed in a plan view, can be narrowed and deterioration in the appearance can be restrained.

In the label manufacturing method according to the first embodiment, the manufacturing devices 1000, 2000, the manufacturing method used by these devices, and the label 200 obtained by the device, the print surface 10a of the resin sheet 10 is arranged on the side opposite to the side where the adhesive 20 is arranged. However, this is not limiting. For example, a print may be made on the side of the resin sheet 10 where the adhesive 20 is arranged. In this case, printing is not carried out by the printing device 1300 in the manufacturing devices 1000, 2000, and a label sheet where printing is carried out in advance and which has an adhesive arranged on the print surface is prepared in the label sheet preparation process (S1).

## Claims

1. A method for manufacturing a printed material, the method comprising:
irradiating a resin sheet with an electron beam;
printing an image on at least one side of the resin sheet; and
irradiating the resin sheet with a laser and thus splitting the resin sheet into a desired shape.

2. The method for manufacturing a printed material according to claim 1, the method comprising:
irradiating, with the electron beam, the resin sheet of a label sheet in which the resin sheet, an adhesive arranged on one side of the resin sheet, and a release paper for protecting the adhesive are stacked on each other;
printing the image on the other side of the resin sheet that is opposite to the one side; and
irradiating the other side of the resin sheet with a laser and thus splitting the resin sheet into a desired shape.

3. The method for manufacturing a printed material according to claim 1 or 2, wherein
the printing is carried out by an ink jet method.

4. A device (1000) for manufacturing a printed material, the device comprising:
an electron beam irradiation device (1200) for irradiating a resin sheet with an electron beam;
a printing device for printing an image on at least one side of the resin sheet; and
a laser irradiation device (1400) for irradiating the resin sheet with a laser and thus splitting the resin sheet into a desired shape.

5. A device for manufacturing a printed material according to claim 4, the device being adapted to execute:
irradiating, with the electron beam irradiation device, a resin sheet of a label sheet in which the resin sheet, an adhesive arranged on one side of the resin sheet, and a release paper for protecting the adhesive are stacked on each other;
printing, with the printing device, an image on the other side of the resin sheet that is opposite to the one side; and
irradiating, with the laser irradiation device, the other side of the resin sheet with a laser and thus splitting the resin sheet into a desired shape.

6. The device for manufacturing a printed material according to claim 4 or 5, wherein
the printing device is an ink jet printing device.

7. A printed material comprising an image printed on at least one side of a resin sheet irradiated with an electron beam, wherein
the resin sheet has a split part for splitting the resin sheet into a desired shape, and
the split part is formed by a laser.

8. A printed material comprising a label sheet in which a resin sheet, an adhesive arranged on one side of the resin sheet, and a release paper for protecting the adhesive are stacked on each other, with the resin sheet irradiated with an electron beam, wherein
an image is printed on the other side of the resin sheet that is opposite to the one side, and
the other side of the resin sheet is irradiated with a laser, and a split part for splitting the resin sheet into a desired shape is thus formed.

9. The printed material according to claim 7 or 8, wherein
the printing of the image is carried out by an ink jet method.
